# EUROPEAN PATENT APPLICATION

(11) **EP 4 614 621 A1**
(43) Date of publication of application: **10.09.2025**
(21) Application number: 23885519.1
(22) Date of filing: 17.10.2023
(51) Int. Cl.: H01M 4/62, A01N 25/04, A01N 43/40, A01N 43/707, A01P 1/00, A01P 3/00, C01B 32/174, C09D 17/00, H01B 1/24, H01M 4/139

(54) **CARBON MATERIAL DISPERSION SOLUTION, AND SLURRY COMPOSITION FOR SECONDARY BATTERY NEGATIVE ELECTRODES IN WHICH SAME IS USED**

(30) Priority: 31.10.2022 JP 2022175139; 20.04.2023 JP 2023069029
(71) Applicant: MITSUBISHI PENCIL COMPANY, LIMITED, Tokyo 140-8537 (JP)
(72) Inventor: Hayakawa, Takayuki, Tokyo 140-8537 (JP); Matsushima, Ryosuke, Fujioka-shi, Gunma 375-8501 (JP); Sakuma, Satoshi, Fujioka-shi, Gunma 375-8501 (JP); Abe, Hiroshi, Fujioka-shi, Gunma 375-8501 (JP)
(74) Representative: Vossius & Partner Patentanwälte Rechtsanwälte mbB
(86) International application number: PCT/JP2023/037519
(87) International publication number: WO 2024/095757

(57) **Abstract**

There are provided a carbon material dispersion which is effective for a wide range of microorganisms such as bacteria, molds, and yeasts without adversely affecting other blending components, has high antiseptic and antibacterial effects and high durability thereof with a small amount over a long period of time under any environment, and thereby achieves both high dispersibility and storage stability, and a slurry composition for a negative electrode for a secondary battery using the dispersion, which is suitable for producing a battery such as a lithium ion battery and an electrode. The carbon material dispersion according to the present embodiment is a carbon material dispersion containing at least a carbon material containing carbon nanotubes, a dispersant, a preservative, and a liquid medium, wherein the preservative contains a triazine-based compound and at least one selected from the following group A. Group A: iodopropargyl-based, pyridine-based, pyrithione-based, oxyquinoline-based, benzothiazole-based, isothiazoline-based, and dithiol-based compounds.

## Description

### Technical Field

The present specification relates to a carbon material dispersion capable of preventing propagation of bacteria, molds, and the like to improve dispersibility and storage stability, and a slurry composition for a negative electrode for a secondary battery using the same, which is suitable for producing an electrode and a battery such as a lithium ion battery.

### Background Art

In recent years, secondary batteries have been widely used in various fields such as electric vehicles, power storage, and information apparatuses. There are a lot of proposals because when as an electrode material of the secondary battery, a dispersion containing carbon nanotubes is used for an electrode and the like of the secondary battery, it is possible to achieve good conductive performance, to reduce electrode resistance, and to efficiently form a conductive network with a small amount. An electrode of a secondary battery is produced by applying a slurry for forming an electrode layer containing a dispersion containing carbon nanotubes, a conductive material, an active material, a binder, and the like onto a current collector plate.

For example, Patent Document 1 discloses, as a negative electrode mixture slurry for a non-aqueous electrolyte secondary battery, a slurry in which surface-modified natural graphite as an active material, a carbon nanotube dispersion, carboxymethyl cellulose (CMC), and styrene-butadiene rubber (SBR) as a binding agent are dispersed in water.

In a case of such a water-based slurry, there is a problem in long-term storage, such as corrosion or mold generation, depending on passage of time or the storage environment.

For this reason, there have been proposals to use, as preservatives and bactericides for water-based slurries, 1) acids, salts, isothiazoline-based preservatives, alcohols, and the like (see, for example, Patent Document 2), 2) alcohols, chlorines, acids, alkalis, nitrogen-containing organic sulfur-based compounds, and the like (see, for example, Patent Document 3), and 3) isothiazoline compounds (CIT, MIT, OIT, BIT) and further use in combination with pyrithione compounds (see, for example, Patent Document 4).

However, even with the preservatives, bactericides, and the like described in Patent Documents 2 to 4, molds and bacteria rarely occur depending on carbon nanotubes, a type of carbon material, a type of a blending component, and the like to be used, or depending on the production environment, the storage environment, and the like, and there has been a problem in that defects occur in dispersibility and storage stability.

### Citation List

### Patent Document

Patent Document 1: JP 2015-195143 A (Claims, Examples, and the like)
Patent Document 2: WO 2015/16283 A1 (Claims, Examples, and the like)
Patent Document 3: JP 2011-181195 A (Claims, Examples, and the like)
Patent Document 4: WO 2012/26462 A1 (Claims, Examples, and the like)

### Summary of Invention

### Technical Problem

The present disclosure aims to solve the above-described problems and the like in the related art, and is directed to providing a carbon material dispersion capable of preventing propagation and the like of bacteria, molds, and the like to improve dispersibility and storage stability, and a slurry composition for a negative electrode for a secondary battery using the same, which is suitable for producing an electrode and a battery such as a lithium ion battery.

### Solution to Problem

As a result of intensive studies on the above-described problems and the like in the related art, the present inventors have found that by making a carbon material dispersion containing at least a carbon material containing carbon nanotubes, a dispersant, a specific preservative, and a liquid medium, it is possible to obtain the carbon material dispersion of interest, and a slurry composition for a negative electrode for a secondary battery using this dispersion, which is suitable for producing a battery such as a lithium ion battery and an electrode, and have completed the present disclosure.

That is, the carbon material dispersion of the present disclosure is a carbon material dispersion containing at least a carbon material containing carbon nanotubes, a dispersant, a preservative, and a liquid medium, in which the preservative contains a triazine-based compound and at least one selected from Group A below.

Group A: organic sulfur-based, organic nitrogen-sulfur-based, organic halogen-based, haloallylsulfone-based, iodopropargyl-based, N-haloalkylthio-based, nitrile-based, pyridine-based, pyrithione-based, 8-oxyquinoline-based, benzothiazole-based, isothiazoline-based, dithiol-based, pyridineoxide-based, nitropropane-based, organotin-based, phenol-based, quaternary ammonium salt-based, thiazine-based, anilide-based, adamantane-based, dithiocarbamate-based, brominated indanone-based, benzylbromacetate-based, and inorganic salt-based compounds

A content of the triazine-based compound is preferably 0.001 to 0.2 mass% with respect to a total amount of the dispersion, and a total content of the preservative is preferably 0.3 mass% or less with respect to the total amount of the dispersion.

The preservative preferably exhibits a preservative effect against at least one species selected from the group consisting of genus Fusarium, genus Cellulomonas, genus Delftia, genus Cupriavidus, genus Rhizobium (formerly Agrobacterium radiobacter), genus Micrococcus, genus Stomatococcus, genus Planococcus, genus Staphylococcus, genus Deinococcus, genus Streptococcus, genus Leuconostoc, genus Pediococcus, genus Aerococcus, genus Gemella, genus Peptococcus, genus Peptostreptococcus, genus Ruminococcus, genus Coprococcus, genus Sarcina, genus Bacillus, genus Sporolactobacillus, genus Clostridium, genus Desulfotomaculum, genus Sporosarcina, genus Oscillospira, genus Lactobacillus, and genus Listeria.

The slurry composition for a negative electrode for a secondary battery of the present disclosure contains at least the carbon material dispersion having the composition described above.

### Advantageous Effects of Invention

According to the present disclosure, it is possible to provide a carbon material dispersion capable of preventing propagation or the like of bacteria, molds, and the like to improve dispersibility and storage stability, and a slurry composition for a negative electrode for a secondary battery using the same, which is suitable for producing an electrode for a battery such as a lithium ion battery.

The object and effects of the present disclosure can be recognized and obtained especially using the components and combinations indicated in the claims. Both general explanation described above and detailed explanation described below are exemplary and explanatory and do not limit the present disclosure described in claims.

### Description of Embodiments

Hereinafter, embodiments of the present disclosure will be described in detail. Note that the technical scope of the present disclosure is not limited to the embodiment described below but includes the invention described in Claims and equivalents thereof. In addition, the present disclosure can be implemented based on the contents disclosed in the present specification and technical common knowledge (including design matters and obvious matters) in the art.

The carbon material dispersion of the present disclosure is a carbon material dispersion containing at least a carbon material containing carbon nanotubes, a dispersant, a preservative, and a liquid medium, in which the preservative contains a triazine-based compound and at least one selected from Group A below.

Group A: organic sulfur-based, organic nitrogen-sulfur-based, organic halogen-based, haloallylsulfone-based, iodopropargyl-based, N-haloalkylthio-based, nitrile-based, pyridine-based, pyrithione-based, 8-oxyquinoline-based, benzothiazole-based, isothiazoline-based, dithiol-based, pyridineoxide-based, nitropropane-based, organotin-based, phenol-based, quaternary ammonium salt-based, thiazine-based, anilide-based, adamantane-based, dithiocarbamate-based, brominated indanone-based, benzylbromacetate-based, and inorganic salt-based compounds

### Carbon Nanotube (CNT)

The carbon nanotube (CNT) to be used in the present disclosure is not particularly limited as long as it has a shape in which substantially one sheet of graphite is wound into a cylindrical shape, and any of a single-walled CNT in which one sheet of graphite is wound into one layer and a multi-walled CNT in which one sheet of graphite is wound into two layers or three or more layers can be used.

Examples of the carbon nanotube include, but are not limited to, a graphite whisker, a filamentous carbon, a graphite fiber, an ultrafine carbon tube, a carbon tube, a carbon fibril, a carbon microtube, and a carbon nanofiber. They may be used alone or in combination of two or more (hereinafter, simply referred to as "at least one").

Furthermore, the average outer diameter of the carbon nanotubes is preferably 1 nm or more and 90 nm or less, more preferably 3 nm or more and 30 nm or less, and even more preferably 3 nm or more and 15 nm or less, from the viewpoint of the viscosity, conductivity, and stability of the dispersion.

In the present disclosure, the average outer diameter of the carbon nanotubes refers to an arithmetic average value of a sufficient number n of outer shapes measured using an image of a transmission electron microscope at a magnification of 100000 times or more.

The purity of the carbon nanotubes to be used in the present disclosure is preferably 90 to 100 mass%, and particularly preferably 95 to 100 mass%. Note that the purity of the carbon nanotubes is calculated based on an amount of an impurity which is an ash content measured in accordance with JIS K 1469 or JIS K 6218.

Specifically, the carbon nanotubes (CNT) that can be used include at least one of NC7000 (average outer diameter 10 nm) available from Nanocyl SA, BaytubesC150P (average outer diameter 11 nm) available from Bayer AG, FloTube9000 (average outer diameter 19 nm), FloTube7320 (average outer diameter 9 nm), FloTube7010 (average outer diameter 9 nm), FloTube6810 (average outer diameter 8 nm), FloTube6120 (average outer diameter 8 nm), FloTube6100 (average outer diameter 8 nm), and FloTube2020 (average outer diameter 4 nm) available from JiangSu Cnano Technology Ltd., MEIJOeDIPS EC2.0 (average outer diameter 2.0 nm) available from Meijo Nano Carbon Co., Ltd., KORBON-A7 (average outer diameter 1.2 nm) available from KORBON Co., Ltd., NFT-7 (average outer diameter 30 nm) available from Koatsu Gas Kogyo Co., Ltd., NFT-15 (average outer diameter 30 nm) available from Koatsu Gas Kogyo Co., Ltd., or the like.

The content of these carbon nanotubes (CNTs) can be set to a suitable content, and is not particularly limited. Preferably, from the viewpoint of achieving both high stability and conductive performance and the viewpoint of a preferable viscosity of the coating liquid, the content thereof is preferably 0.1 to 15.0 mass%, more preferably 0.1 to 10.0 mass%, even more preferably 0.1 to 8.0 mass%, 0.1 to 6.0 mass%, and particularly preferably 0.1 to 5.0 mass%, with respect to the total amount of the dispersion.

When the content of the carbon nanotubes (CNT) is 0.1 mass% or more, sufficient conductivity can be secured, and on the other hand, when the content is 15.0 mass% or less, stability and good conductivity of the coating liquid can be secured.

### Carbon Material

Examples of the carbon material other than the carbon nanotubes (CNT) include carbon particles such as graphene, graphite, and carbon black such as acetylene black and ketjen black. They may be used alone or in combination.

The shape of these carbon particles is not particularly limited, and may be, for example, a flat shape, an array shape, or a spherical shape.

The average particle size of the carbon particles can be 100 nm or greater, 200 nm or greater, 300 nm or greater, 500 nm or greater, 700 nm or greater, 1 µm or greater, 2 µm or greater, or 3 µm or greater, and can be 20 µm or less, 15 µm or less, 10 µm or less, or 7 µm or less. Here, the average particle size adopted in the present specification is appropriately selected depending on the size of the carbon particles of interest. In a case of particles having a particle size of less than about 1 µm, the average particle size is a value of a histogram average particle size (D50) according to a scattering intensity distribution measured by a dynamic light scattering method. In a case of particles having a particle size of 1 µm or greater, the average particle size is a value of a median size (D50) calculated on a volumetric basis by laser diffractometry. The measurement by the dynamic light scattering method can be performed using, for example, DelsaMax CORE (Beckman Coulter, Inc.). The measurement by the laser diffractometry can be performed using, for example, a particle size distribution analyzer MT3300II (MicrotracBEL Corp.).

The content of the carbon particles can be set to a suitable content and is not particularly limited. Preferably, from the viewpoint of achieving both high stability and conductive performance and the viewpoint of a preferable viscosity of the coating liquid, the content thereof is preferably 0.1 to 15.0 mass%, more preferably 0.1 to 10.0 mass%, even more preferably 0.1 to 8.0 mass%, 0.1 to 6.0 mass%, and particularly preferably 0.1 to 5.0 mass%, with respect to the total amount of the dispersion.

### Dispersant

The dispersant to be used in the present disclosure is a component that significantly improves the dispersibility of the carbon material containing the carbon nanotubes described above. Examples thereof include at least one of carboxymethyl cellulose (CMC) or a salt thereof (sodium salt or ammonium salt), cellulose nanofibers (CeNF), anionic, cationic, nonionic, or amphoteric dispersants, and polymer dispersants.

Examples of the carboxymethyl cellulose (CMC) include a combination of carboxymethyl cellulose having a mass average molecular weight of 300000 or less and carboxymethyl cellulose having a mass average molecular weight of 1000000 to 3000000. As the cellulose nanofibers (CeNF), for example, cellulose nanofibers having a crystallinity of 70% or less as measured by an X-ray diffraction method can be appropriately selected and used. As the anionic dispersant, for example, an acrylic resin such as a styrene acrylic resin, a urethane-based resin, a polyester-based resin, a polyvinyl chloride resin, an epoxy-based resin, or the like can be used. The crystallinity of cellulose is a cellulose type I crystallinity calculated by a Segal method from a diffraction intensity value obtained by the X-ray diffraction method, and can be determined by the following equation (1).

Cellulose type I crystallinity (%) = [(I_{22.6} - I_{18.5})/I_{22.6}] × 100 ··· (1) In the equation (1), I_{22.6} represents a diffraction intensity of a lattice plane (002 plane) (diffraction angle 2θ = 22.6°) in X-ray diffraction, and I_{18.5} represents a diffraction intensity of an amorphous portion (diffraction angle 2θ = 18.5°). Note that the cellulose type I means a crystal form of natural cellulose, and the cellulose type I crystallinity means a ratio of a crystal region amount to the entire cellulose.

The content of these dispersants can be set to a suitable content and is not particularly limited. For example, in a case of being used for an electrode paste for a secondary battery, an electrode for a secondary battery, or the like, from the viewpoint of achieving both high stability and conductive performance and the viewpoint of a viscosity at the time of dispersion production, the content thereof is preferably 0.01 to 10 mass%, more preferably 0.05 to 5 mass%, and even more preferably 0.1 to 1 mass%, with respect to the total amount of the dispersion.

### Preservative

The preservative to be used in the present disclosure uses a triazine-based compound and at least one selected from Group A below. With this selective combined use, it is possible to obtain a carbon material dispersion which can be applied over a wide range of antibacterial spectrum (effective against a wide range of microorganisms such as bacteria, molds, and yeasts), has high antiseptic and antibacterial effects and durability thereof with a small amount over a long period of time, can effectively prevent propagation of molds, fungi, yeasts, and the like even under the difference in carbon nanotubes, carbon material types, blended component types, and the like, the difference in production environment, storage environment, and the like, and an environment including a combination thereof, and thereby can achieve both dispersibility and storage stability at a high level.

Group A: organic sulfur-based, organic nitrogen sulfur-based, organic halogen-based, haloallylsulfone-based, iodopropargyl-based, N-haloalkylthio-based, nitrile-based, pyridine-based, pyrithione-based, 8-oxyquinoline-based, benzothiazole-based, isothiazoline-based, dithiol-based, pyridineoxide-based, nitropropane-based, organotin-based, phenol-based, quaternary ammonium salt-based, triazine-based, anilide-based, adamantane-based, dithiocarbamate-based, brominated indanone-based, benzylbromacetate-based, and inorganic salt-based compounds, ethanol, isopropyl alcohol, propyl alcohol, sec-butanol, t-butanol, phenoxyethanol, benzalkonium chloride

The triazine-based compound to be used is a nitrogen-containing six-membered ring compound, and examples thereof include 2,4-bis(N,N'-dipropylamino)-6-chloro-1,3,5-triazine, 2-chloro-4-ethylamino-6-isopropylamino-1,3,5-triazine, 2,4-diethyl-6-octylamino-1,3,5-triazine, hexahydro-1,3,5-trisubstituted-S-triazine compounds such as hexahydro-1,3,5-triethyl-S-triazine, hexahydro-1, 3,5-tris(2-hydroxyethyl)-S-triazine, and hexahydro-1,3,5-tris(2-hydroxyethyl)-1,3,5-triazine, n-caprinoguanamine, and 5-ethylhexylaminoguanamine. When there are commercially available products, they can be used.

Examples of the organic halogen-based compound in Group A above include sodium pentachlorophenol. Specific examples of the pyridine oxide-based compound include sodium 2-pyridinethiol-1-oxide. Examples of the isothiazoline-based compound include 1,2-benzisothiazolin-3-one, 2-n-octyl-4-isothiazolin-3-one, 5-chloro-2-methyl-4-isothiazolin-3-one, 5-chloro-2-methyl-4-isothiazolin-3-one magnesium chloride, 5-chloro-2-methyl-4-isothiazolin-3-one calcium chloride, and 2-methyl-4-isothiazolin-3-one calcium chloride. Examples of the pyrithione-based compound include sodium=1-oxo-1λ(5)-pyridine-2-thiolate (sodium pyrithione), zinc pyrithione, copper pyrithione, and chitosan pyrithione. When there are commercially available products, they can be used.

Among Group A above, an effective combination with the triazine-based compound includes an organic sulfur-based compound, an organic nitrogen sulfur-based compound, an organic halogen-based compound, and a pyrithione-based compound. A combination of the triazine-based compound and the pyrithione-based compound or the combination of the triazine-based compound and the organic nitrogen sulfur-based compound is more preferable, and a combination of the triazine-based compound and the pyrithione-based compound, which is a combination with the nitrogen-containing six-membered ring compound, is particularly preferable.

The content of the triazine-based compound is preferably 0.001 to 0.2 mass%, and more preferably 0.005 to 0.1 mass%, with respect to the total amount of the dispersion. When the total content of the preservatives including Group A above is preferably 0.3 mass% or less and more preferably 0.005 to 0.2 mass% with respect to the total content of the dispersion, without adversely affecting other blending components of the dispersion, the carbon material dispersion can be applied over a wide range of antibacterial spectrum (effective against a wide range of microorganisms such as bacteria, molds, and yeasts), has high antiseptic and antibacterial effects and durability thereof with a small amount over a long period of time, can effectively prevent propagation of molds, fungi, yeasts, and the like even under the difference in blended components of the dispersion, the difference in production environment, storage environment, and the like, and an environment including a combination thereof, and thereby can achieve both dispersibility and storage stability at a high level.

In the present disclosure, the preservative of the triazine-based compound and at least one selected from Group A above can effectively prevent microorganisms such as bacteria, molds, and yeasts to be targeted which would be propagated in the carbon material dispersion from propagation in a wide range. In particular, the preservative is particularly excellent in antiseptic and antibacterial effects against at least one type of microorganisms selected from genus Fusarium, genus Cellulomonas, genus Delftia, genus Cupriavidus, genus Rhizobium (formerly Agrobacterium radiobacter), genus Micrococcus, genus Stomatococcus, genus Planococcus, genus Staphylococcus, genus Deinococcus, genus Streptococcus, genus Leuconostoc, genus Pediococcus, genus Aerococcus, genus Gemella, genus Peptococcus, genus Peptostreptococcus, genus Ruminococcus, genus Coprococcus, genus Sarcina, genus Bacillus, genus Sporolactobacillus, genus Clostridium, genus Desulfotomaculum, genus Sporosarcina, genus Oscillospira, genus Lactobacillus, and genus Listeria with a small amount over a long period of time.

The liquid medium to be used in the present disclosure is water (for example, purified water, distilled water, pure water, ultrapure water, tap water, ion-exchanged water, or the like), or in addition to water, a water-soluble solvent can be used, as necessary.

Examples of the water-soluble solvent that can be used include at least one of alkylene glycols such as ethylene glycol, triethylene glycol, tetraethylene glycol, propylene glycol, dipropylene glycol, 1,2-propanediol, 1,3-propanediol, 1,2-butanediol, 2,3-butanediol, 1,3-butanediol, 1,4-butanediol, 1,2-pentanediol, 1,5-pentanediol, 2,5-hexanediol, 3-methyl-1,3-butanediol, 2-methylpentane-2,4-diol, 3-methylpentane-1,3,5-triol, and 1,2,3-hexanetriol, polyalkylene glycols such as polyethylene glycol and polypropylene glycol, glycerols such as glycerol, diglycerol, and triglycerol, lower alkyl ethers of glycols such as ethylene glycol monomethyl ether, ethylene glycol monoethyl ether, diethylene glycol monomethyl ether, and diethylene glycol mono-n-butyl ether, N-methyl-2-pyrrolidone, and 1,3-dimethyl-2-imidazolidinone.

In addition, for example, water-soluble solvents such as amides such as dimethylformamide and dimethylacetamide, or ketones such as acetone can also be mixed.

The content of these water-soluble solvents varies depending on adjustment of a solid content of the dispersion, but is preferably 0.1 to 7 mass%, with respect to the total amount of the dispersion, and more preferably less than 10 mass% and even more preferably 0.1 to 5 mass%, from the viewpoint of improving the mixing property of the slurry and the drying property.

To the carbon material dispersion of the present disclosure, an additive may be added in accordance with use. Examples thereof include an anti-precipitating agent, a wetting agent, an emulsifier, an anti-sagging agent, a defoaming agent, a leveling agent, and a plasticizer.

The carbon material dispersion of the present disclosure can be produced, for example, by charging at least the carbon material containing carbon nanotubes, the dispersant, the preservative, the liquid medium (water), and the like, stirring and mixing them, and then performing a dispersion process.

The dispersion processing of the dispersion can be performed using a dispersion apparatus, for example, an ultrasonic disperser; a mixer such as a disper, a homomixer, a planetary centrifugal mixer, a Henschel mixer, or a planetary mixer; a media disperser such as a (high-pressure) homogenizer, a paint conditioner, a colloid mill, a bead mill, a cone mill, a ball mill, a sand mill, an attritor, a pearl mill, or a CoBall mill; a medialess disperser such as a wet jet mill or a thin-film rotation high-speed mixer; or another roll mill, but the dispersion apparatus is not limited thereto.

From the viewpoint of stability and dispersion efficiency, as the preferable dispersion apparatus, a thin-film rotation high-speed mixer,and a bead mill are preferable.

The carbon material dispersion of the present disclosure preferably has a viscosity value (mPa·s) at 25°C at a rotation speed of 10 rpm using an E-type rotational viscometer [TV-25 (available from Toki Sangyo Co., Ltd.) rotor (1°34' × R24 mm)] is preferably 5 to 700, and more preferably 5 to 200, from the viewpoint of obtaining fluidity of an electrode slurry prepared by adding the carbon material dispersion.

The carbon material dispersion of the present disclosure thus configured can be applied to a wide range of antibacterial spectrum (effective against a wide range of microorganisms such as bacteria, molds, and yeasts, particularly the above-described genus Fusarium to genus Listeria) without adversely affecting other blending components of the dispersion, has high antiseptic and antibacterial effects and durability thereof with a small amount over a long period of time, can effectively prevent propagation of molds, fungi, yeasts, and the like even under the difference in blended component types and the like of the dispersion, the difference in production environment, storage environment, and the like, and an environment including a combination thereof, and thereby can achieve both dispersibility and storage stability at a high level. Thus, both high stability and conductive performance can be achieved when the dispersion is used for electrode production or the like, and the dispersion has carbon nanotubes and the like uniformly dispersed without adversely affecting insertion and extraction of ions such as Li⁺ or reduction in resistance value of the electrode, and has excellent dispersion stability.

When the carbon material dispersion is used for a negative electrode of a battery such as a lithium ion battery, a conductive agent and an active material can be uniformly distributed in coating for forming an electrode. A composition for an electrode suitable for producing an electrode of a battery such as a high-efficiency lithium ion battery can be obtained without adversely affecting the resistance value of the electrode itself while maintaining cycle characteristics and self-discharge characteristics at a high level.

The carbon material dispersion has excellent performance which has not been achieved in the related art, and thus can be used as a slurry for an electrode, a slurry for a positive electrode suitable for a secondary battery such as a lithium ion battery, a slurry for a negative electrode, or the like by further adding various components.

### Slurry Composition for Negative Electrode for Secondary Battery of Present Disclosure

The slurry composition for a negative electrode for a secondary battery of the present disclosure contains at least the carbon material dispersion having the above-described composition, and can be preferably prepared by using the above-described carbon particles serving as a conductive agent, the dispersant, the preservative (combination of the triazine-based compound and Group A), the liquid medium, and the like in appropriate amounts, as needed, in addition to the negative electrode active material and the binder component.

The negative electrode active material that can be used is not particularly limited. For example, metal oxide-based active material particles and silicon-based active material particles can be used, and particularly metal oxide-based negative electrode active material particles can be used.

As the metal oxide-based negative electrode active material particles, for example, titanium oxide can be used. The titanium oxide is not particularly limited as long as it is capable of occluding and releasing lithium. For example, spinel-type lithium titanate, ramsdellite-type lithium titanate, titanium-containing metal composite oxide, titanium dioxide having a monoclinic crystal structure (TiO₂ (B)), or anatase-type titanium dioxide can be used.

Examples of the spinel-type lithium titanate include Li₄ + xTi₅O₁₂ (x varies in a range of -1 ≤ x ≤ 3 depending on a charge-discharge reaction) . Examples of the ramsdellite-type lithium titanate include Li₂ + yTi₃O₇ (y varies in a range of -1 ≤ y ≤ 3 depending on the charge-discharge reaction). Examples of TiO₂ (B) and the anatase-type titanium dioxide include Li₁ + zTiO₂ (z varies in a range of -1 ≤ z ≤ 0 depending on the charge-discharge reaction).

Examples of the titanium-containing metal composite oxide include metal composite oxides containing Ti and at least one element selected from the group consisting of P, V, Sn, Cu, Ni, and Fe. Examples of the metal composite oxide containing Ti and at least one element selected from the group consisting of P, V, Sn, Cu, Ni, and Fe include TiO₂-P₂O₅, TiO₂-V₂O₅, TiO₂-P₂O₅-SnO₂, and TiO₂-P₂O₅-MeO (Me is at least one element selected from the group consisting of Cu, Ni, and Fe).

Preferably, such a metal composite oxide has low crystallinity and has a microstructure in which a crystal phase and an amorphous phase coexist or an amorphous phase singly exists. With the microstructure, it is possible to further improve cycle performance.

In the slurry composition for a negative electrode for a secondary battery according to the present disclosure, the content of the negative electrode active material is preferably 30 to 60 mass%, and more preferably 35 to 55 mass%, with respect to the total amount of the slurry for a negative electrode, from the viewpoint of ensuring a battery capacity and the viewpoint of ensuring fluidity of the slurry.

### Binder component

As the binder component, for example, various emulsion-type polymers can be used. Specific examples thereof include fluorine-based emulsion-type polymers such as polyvinylidene fluoride (PVdF) and polytetrafluoroethylene (PTFE), elastomer-based emulsion-type polymers such as ethylene-propylene-diene copolymer (EPDM), nitrile-butadiene rubber (NBR), and styrene-butadiene rubber (SBR), and acrylic emulsion-type polymers.

Among such polymers, it is preferable to use an elastomer-based emulsion-type polymer, particularly a styrene-based elastomer-based emulsion-type polymer, particularly styrene-butadiene rubber, from the viewpoint of conductivity.

As the polymer, a natural polymer such as a polysaccharide, or a synthetic polymer can be used. Such a polymer may be used as a thickener. Examples of the polysaccharide that can be used include gum arabic, tragacanth gum, guar gum, locust bean gum, alginic acid, carrageenan, gelatin, xanthan gum, welan gum, succinoglycan, diutan gum, dextran, methyl cellulose, ethyl cellulose, hydroxyethyl cellulose, and starch glycolic acid and its salts.

Examples of the synthetic polymer that can be used include water-soluble resins such as poly (vinyl methyl ether), poly (acrylic acid) and its salts, poly(ethylene oxide), a vinyl acetate-polyvinylpyrrolidone copolymer, a styrene-acrylic acid copolymer and its salt, and an isobutylene maleic anhydride copolymer and its salt.

Examples of the polymer that can be used include nonionic dispersants such as polyalkylene oxide, polyvinyl acetal, polyvinyl ether, chitins, chitosans, and starch. These polymers may be used as dispersing aids.

The content of each of the binder components can be set to a suitable content and is not particularly limited. Preferably, from the viewpoint of a preferable viscosity of the coating liquid and the viewpoint of electrode stability, the content thereof is preferably 0.1 to 2 mass%, more preferably 0.2 to 1 mass%, and even more preferably 0.2 to 0.8 mass%, with respect to the total amount of the slurry composition.

In addition to the carbon material dispersion, the negative electrode active material, the dispersant, and the binder component, the slurry composition for a negative electrode for a secondary battery according to the present disclosure may further contain carbon particles serving as the above-described conductive material, the dispersant, the preservative (combination of the triazine-based compound and Group A, the content thereof is in the above-described range), the liquid medium, and the like in respective appropriate amounts, and may further contain a pH adjuster, a leveling agent, a solid electrolyte material, a release agent, and the like as long as the effects of the present disclosure are not impaired.

### pH adjuster

The slurry composition for a negative electrode for a secondary battery according to the present disclosure preferably has a pH of 4 to 9 from the viewpoint of corrosion of a current collector and the viewpoint of composition stability.

As the pH adjuster that can be used, at least one of ammonia, urea, monoethanolamine, diethanolamine, triethanolamine, aminomethylpropanol, an alkali metal salt of carbonic acid or phosphoric acid, such as sodium tripolyphosphate or sodium carbonate, or a hydroxide of an alkali metal, such as sodium hydroxide can be used.

The slurry composition for a negative electrode for a secondary battery of the present disclosure contains at least the carbon material dispersion, preferably the negative electrode active material, and the binder component, and can be produced, for example, by charging the carbon material dispersion, the negative electrode active material, the conductive material, and the like, stirring and mixing them, and then performing a dispersion process using the following apparatus. Examples of the production apparatus that can be used for dispersion processing include, but are not limited to, an ultrasonic disperser; mixers such as a disper, a homomixer, a planetary mixer, a Henschel mixer, and a planetary mixer; media dispersers such as a (high-pressure) homogenizer, a paint conditioner, colloid mills, a bead mill, a cone mill, a ball mill, a sand mill, an attritor, a pearl mill, and a CoBall mill; medialess dispersers such as a wet jet mill and a thin-film rotation high-speed mixer; and other roll mills.

From the viewpoint of stability and dispersion efficiency, as the preferable apparatus, a planetary mixer, a bead mill, or the like is preferable.

In addition, the slurry composition for a negative electrode for a secondary battery according to the present disclosure preferably has a viscosity of 0.1 to 1.5 Pa·s at a shear rate of 1000 s⁻¹, from the viewpoint of precipitation stability and the viewpoint of coatability.

The viscosity can be adjusted by suitably combining a dispersant, an anti-precipitating agent, a slurry material concentration, and the like.

The slurry composition for a negative electrode for a secondary battery according to the present disclosure configured as described above contains the carbon material dispersion that has high antiseptic and antibacterial effects and durability thereof in a small amount over a long period of time and achieves both dispersibility and storage stability at a high level, or can contain the preservative (combination of the triazine-based compound and Group A) in preparing the slurry composition for a negative electrode. Thus, it is possible to uniformly distribute the carbon material containing carbon nanotubes serving as the conductive material and the active material when applied to form an electrode, and to form a negative electrode having high stability and a low resistance value when formed into an electrode.

Further, in the present disclosure, as will be described in more detail in Test Example 3, when the preservative (combination of the triazine-based compound and Group A) is used, dispersibility is particularly improved in relation to the pH of the carbon material dispersion, and the carbon material dispersion having a low viscosity is obtained.

### Examples

Hereinafter, the present disclosure will be described using Test Examples 1 to 3 corresponding to Examples and Comparative Examples, but the present disclosure is not limited to these Test Examples.

### Test Example 1

### Test of Propagation of Bacteria and Molds in Carbon Material Dispersion Depending on Difference in Preservative and Evaluation thereof

Using specimens A to J having blending compositions shown in Table 1 below, a test of propagation of bacteria and molds (bioburden test: medium immersion method) and its antiseptic effect (antibacterial property and antifungal property) were performed by the following method.

### Evaluation method

A carbon material dispersion (total amount of 100 mass%: basic composition) was composed of 1.2 mass% of carbon nanotubes (FT612), 0.6 mass% of a dispersant (polyvinylpyrrolidone: PVP K30, available from Sumitomo Pharma Food & Chemical Co., Ltd.), and water (balance). Next, a slurry composition for a negative electrode using the carbon material dispersion was prepared, and respective preservatives (mass%) described in Table 1 below were added thereto to prepare specimens A to J.

A contaminated slurry was further added to each of the specimens A to J and left to stand at a constant temperature (culture temperature of 32.5°C, the same applies hereinafter) to achieve a preservative effect (antibacterial property and antifungal property) on general viable bacteria (culture medium: SCDLPA) and molds (culture medium: CPPDA) over time was performed.

The antiseptic effect (antibacterial property and antifungal property on Day 1, Day 7, and Day 14 after inoculation) are shown in Table 1 below. The final contamination concentration was about 3E + 04 cfu/ml. when bacterial species were identified by a bacterial identification method using MALDI-TOF (matrix-assisted laser-ionization time-of-flight mass spectrometry) for general viable bacteria (medium: SCDLPA) and molds (medium: CPPDA) in the contaminated slurry, and four bacterial genera (genus Cellulomonas, genus Delftia, genus Cupriavidus, and genus Rhizobium (formerly Agrobacterium radiobacter)) were specified as shown in Table 2 below.

### Test Example 2

### Test of Proliferation of Bacteria and Fungi in Carbon Material Dispersion Depending on Presence or Absence of Preservative: Triazine-Based Compound plus Pyrithione-Based Compound, and Evaluation thereof

Using specimens 1 to 4 having the blending compositions shown in Table 3 below, a test of proliferation of general viable bacteria and fungi and the preservative effect (antibacterial property) thereof were performed by the following method.

### Evaluation method

Specimen 1 was obtained by sterilizing the slurry composition (basic composition) for a negative electrode using the carbon material dispersion at a product temperature of 70°C for 60 minutes.

Specimen 2 was prepared by adding a slurry composition for a negative electrode contaminated with general viable bacteria and fungi to specimen 1.

Specimen 3 was prepared by adding the triazine-based compound plus the pyrithione-based compound shown in Table 1 to specimen 2 in a total amount of 0.067 mass%.

As specimen 4, the slurry composition (basic composition) for a negative electrode using the carbon material dispersion was used.

Specimens 1 to 4 were left to stand at a constant temperature to achieve preservative effects (antibacterial property and antifungal property) on general viable bacteria (medium: SCDLPA) and fungi (medium: CPPDA) over time immediately after, two weeks after, and one month (30 days) after inoculation, and a change in viscosity over time at a shear rate of 0.2 s⁻¹ and a shear rate of 1000 s⁻¹ were evaluated.

The viscosities at a shear rate of 0.2 s⁻¹ and a shear rate of 1000 s⁻¹ were measured by the following methods.

Viscosity values were measured at 25°C at a shear rate of 0.2 s⁻¹ and a shear rate of 1000 s⁻¹ using a rheometer (MCR302, Anton Paar GmbH. cone plate φ 50 mm 2°) .

The antiseptic effect (antibacterial property and antifungal property) and change in viscosity over time at each of a shear rate of 0.2 s⁻¹ and a shear rate of 1000 s⁻¹ are shown in Tables 4 and 5 below.

### Test Example 3

Evaluation of Viscosity Change and the like in Case of Using Each Carbon Material Dispersion Containing Preservative: Triazine-based Compound and Pyrithione-based Compound at pH 3.7 to 9.6, and Electrode Characteristics such as Sheet Resistance and the like in Case of Being Formed into Negative Electrode Slurry Composition

Using Test Examples 3-1 to 3-10 having blending compositions shown in Table 6 below, bead mill dispersion processing was performed, and pH (before dispersion and after dispersion), a viscosity (viscosity immediately after and 2 hours after addition of the preservative), an average particle diameter, L*, a sheet resistance, and glossiness were measured and evaluated by the following methods.

### The results are shown in Table 6 below.

### pH measurement

A pH meter F72 [available from HORIBA, Ltd.] was used to measure pH (25°C) .

### Viscosity measurement

By using a viscosity value (mPa·s) measured with E-type rotational viscometer [TV-25 (available from Toki Sangyo Co., Ltd.) rotor (1°34' × R24 mm)] at a rotational speed of 10 rpm at 25°C, a viscosity (viscosity immediately after and 2 hours after addition of the preservative) was determined.

### Measurement of particle diameter

A median diameter was measured by a cumulant analysis method using a dynamic light scattering method (25°C).

### Measurement of gloss

The carbon material dispersion was applied onto one surface of a PET film (Lumirror #100-T60, Toray Industries, Inc.) using an applicator having a clearance of 50 µm, and then dried at 80°C, and glossiness was measured using a gloss meter (Suga Test Instruments Co., Ltd.).

### Sheet resistance

The carbon material dispersion was further transferred to a planetary mixer, a binder material of SBR was added thereto, and the composition was kneaded for 120 minutes with a revolution speed set to 10 rpm to obtain a slurry for an electrode.

For the obtained slurry for an electrode, a sheet resistance body serving as evaluation of conductivity was measured by the following measurement method.

The prepared slurry was applied onto one surface of a PET film (Lumirror #100-T60, Toray Industries, Inc.) using an applicator having a clearance of 50 µm, and then dried at 80°C, and a resistance value of the obtained film was measured. The resistance value was measured as sheet resistance by using an apparatus composed of a four-point probe having a probe interval of 10 mm and Milliohm high tester 3227 (available from HIOKI E.E. CORPORATION).

The sheet resistance was 1.0 kΩ/□ or less, and thus it was confirmed that it has excellent conductivity.

**[Table 1]**

| (Test Example 1) | | | | | | | | | | | |
|---|---|---|---|---|---|---|---|---|---|---|---|
| Specimen type | Liquid amount | Slurry composition for negative electrode | Slurry composition containing bacterial strain | Isopropyl alcohol | Triazine-based compound plus pyrithione-based compound *2 | Organic nitrogen sulfur-based compound *3 | Pyrithione-based compound *4 | Bacterial species /mold species | 1 day after inoculation | 7 days afer inoculation | 14 days after inoculation |
| A | 10 | 100 | 10% | | | | | General viable bacteria | 2.6E + 04 | 1.1E + 04 | 3.3E + 04 |
| | | | | | | | | Mold | 5.0E + 02 | 1.4E + 03 | 2.7E + 04 |
| B | 10 | 100 | 10% | 1 | | | | General viable bacteria | 3.8E + 04 | 6.2E + 04 | 2.2E + 02 |
| | | | | | | | | Mold | ± | ND | ND |
| C | 10 | 100 | 10% | 3 | | | | General viable bacteria | 3.9E + 04 | 1.1E + 03 | 8.0E + 01 |
| | | | | | | | | Mold | 5.0E + 02 | ND | ND |
| D | 10 | 100 | 10% | | 0.1 | | | General viable bacteria | ND | ND | ND |
| | | | | | | | | Mold | ± | ND | ND |
| E | 10 | 100 | 10% | | | 01 | | General viable bacteria | 3.1E + 04 | 3.4E + 03 | 1.2E + 04 |
| | | | | | | | | Mold | 1.6E + 03 | 2.3E + 03 | 2.2E + 04 |
| F | 10 | 100 | 10% | | | 0.3 | | General viable bacteria | 1.9E + 04 | 1.5E + 03 | 13E + 04 |
| | | | | | | | | Mold | ND | ± | 2.5E + 04 |
| G | 10 | 100 | 10% | | | 0.5 | | General viable bacteria | 4.5E + 03 | 4.1E + 02 | 5.4E + 03 |
| | | | | | | | | Mold | ND | 3.5E + 02 | 1.6E + 04 |
| H | 10 | 100 | 10% | | | | 0.1 | General viable bacteria | 6.1E + 04 | 8.5E + 03 | 3.2E + 04 |
| | | | | | | | | Mold | 3.0E + 03 | 5.1E + 03 | 3.5E + 04 |
| I | 10 | 100 | 10% | | | | 03 | General viable bacteria | 6.5E + 04 | 1.6E + 04 | 2.6E + 04 |
| | | | | | | | | Mold | 1.7E + 03 | 3.2E + 04 | 3.1E + 04 |
| J | 10 | 100 | 10% | | | | 0.5 | General viable bacteria | 3.4E + 04 | 2.2E + 03 | 9.3E +03 |
| | | | | | | | | Mold | ± | ± | 1.6E + 04 |

| | | | | | | | | | | | |
|---|---|---|---|---|---|---|---|---|---|---|---|
| *2: 0.62 (parts by mass) of hexahydro-1,3,5-tris(20 hydroxyethyl)-1,3,5-triazine plus 0.38 (parts by mass) of sodium pyrithione *3: organic nitrogen-sulfur-based preservative (trade name: BIOCIDE 850A, available from TAISHO TECHNOS Co., Ltd. ) *4: trade name "Hokucide", available from HOKKO SANGYO Co., LTD.: sodium pyrithione | | | | | | | | | | | |

| | (Separation) Origin | Appearance of colonies on plate | | Gram staining | Speculum | MALDI-TOF MS identification results | |
|---|---|---|---|---|---|---|---|
| | | Color | Size | | | | |
| GODF 1-2 | Contaminated slurry | Cream | Small | Positive | Bacillus | *Cellulomonas packistanensis* | Gram positive bacteria |
| GODF 2-2 | | Clear cream | Middle | Negative | Bacillus large | *Delftia acidovorans* | Gram negative bacteria |
| GODF 3-4 | | Orange | Middle | Negative | Bacillus small | *Cupriavidus metallidurans* | Gram negative bacteria |
| GODF 4-1 | | Cream | Large | Negative | Bacillus small | *Agrobacterium radiobacter* | Gram negative bacteria |

**[Table 3]**

| | | | | | | | |
|---|---|---|---|---|---|---|---|
| (Test Example 2) | | | | | | | |

| Specimen type | Slurry composition for negative electrode | | | Bacterial species /fungal species | Immediately after inoculation | 14 days after inoculation | 30 days after inoculation |
|---|---|---|---|---|---|---|---|
| | 70°C sterilization | Bacteria addition | Preservative | | | | |
| Specimen 1 | Good | Bad | Bad | General viable bacteria | ND | ND | ND |
| | | | | Fungi | ND | ND | ND |
| Specimen 2 | Good | Good | Bad | General viable bacteria | 2.20E + 05 | 3.10E + 05 | 2.70E + 06 |
| | | | | Fungi | 9.00E + 02 | 1.80E + 04 | 1.80E + 04 |
| Specimen 3 | Good | Good | Good | General viable bacteria | ND | ND | ND |
| | | | | Fungi | ND | ND | ND |
| Specimen 4 | Bad | Bad | Bad | General viable bacteria | 2.90E + 05 | 1.50E + 06 | 3.00E + 06 |
| | | | | Fungi | 1.8E + 02 ± | - | 3.60E + 05 |

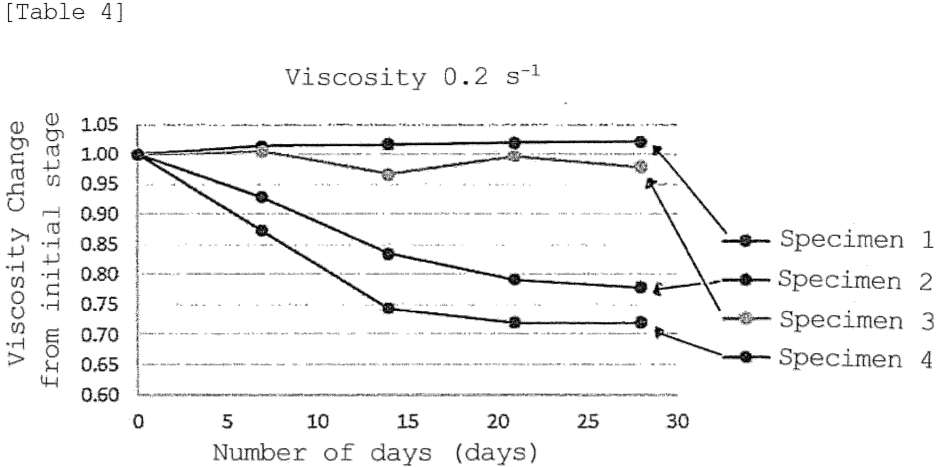

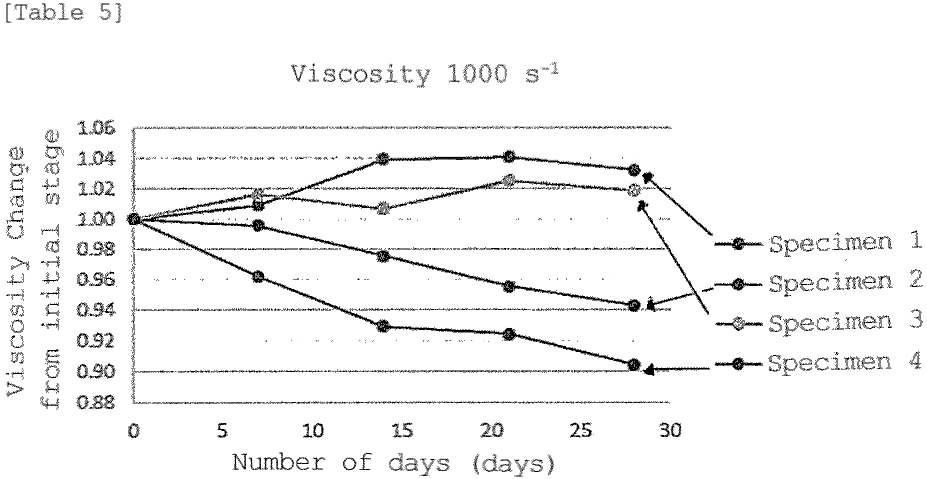

**[Table 6]**

| | Test Example | | | | | | | | | |
|---|---|---|---|---|---|---|---|---|---|---|
| | 3-1 | 3-2 | 3-3 | 3-4 | 3-5 | 3-6 | 3-7 | 3-8 | 3-9 | 3-10 |
| Carbon nanotube *1 | 1.2 | 1.2 | 1.2 | 1.2 | 1.2 | 1.2 | 1.2 | 1.2 | 1.2 | 1.2 |
| Dispersant *2 | 0.6 | 0.6 | 0.6 | 0.6 | 0.6 | 0.6 | 0.6 | 0.6 | 0.6 | 0.6 |
| Preservative *3 | 0.05 | 0.05 | 0.05 | 0.05 | 0.05 | 0.05 | 0.05 | 0.05 | 0.05 | 0.05 |
| pH ad juster (NaOH) | 0 | 0.0005 | 0.001 | 0.002 | 0.003 | 0.0035 | 0.004 | 0.0045 | 0.005 | 0.006 |
| pH adjuster (HCl) | 0.006 | 0.006 | 0.006 | 0.006 | 0.006 | 0.006 | 0.006 | 0.006 | 0.006 | 0.006 |
| Liquid medium (water) | Balance | Balance | Balance | Balance | Balance | Balance | Balance | Balance | Balance | Balance |
| pH before dispersion | 3.7 | 3.9 | 4.2 | 5.1 | 6.5 | 7.0 | 7.6 | 8.1 | 8.6 | 9.6 |
| pH after dispersion | 4.5 | 4.3 | 4.6 | 4.8 | 5.5 | 5.7 | 6.1 | 6.5 | 6.8 | 7.5 |
| Viscosity | 15.6 | 48.7 | 11.2 | 19.3 | 7.0 | 9.8 | 7.7 | 11.8 | 8.1 | 6.6 |
| Viscosity (after 2 hours have passed) | 9.3 | 28.6 | 7.5 | 16.9 | 7.0 | 9.2 | 7.3 | 11.7 | 8.8 | 6.5 |
| Particle diameter (FPAR) | 705 | 504 | 680 | 513 | 504 | 480 | 472 | 326 | 312 | 360 |
| Sheet resistance | 0.22 | 0.1 | 0.17 | 0.1 | 0.11 | 0.13 | 0.13 | 0.08 | 0.08 | 0.13 |
| Gloss | 70 | 64.5 | 67.9 | 75.2 | 104.2 | 86.9 | 90.5 | 103.5 | 126.7 | 112.5 |

| | | | | | | | | | | |
|---|---|---|---|---|---|---|---|---|---|---|
| *1: FT9000 *2: PVP K30 (polyvinylpyrrolidone) *3: triazine-based compound plus pyrithione-based compound (mass ratio: 0.62 : 0.38) | | | | | | | | | | |

As is clear from the evaluation results in Tables 1 to 5 above, in the carbon material dispersion containing the carbon material containing carbon nanotubes in the scope of the present disclosure, the dispersant, the preservative and the liquid medium, it has been found that as the preservative, the combined use of the triazine-based compound and Group A (pyrithione-based compound) of specimen D (Table 1) and specimen 3 (Tables 3 to 5) shows a more excellent antiseptic effect against the four bacterial genera and the like than the single use of the preservative (isopropyl alcohol, an organic nitrogen sulfur-based compound, or a pyrithione-based compound) . Further, it shows little change in viscosity over time, and has excellent stability and dispersibility.

In addition, as is clear from the results shown in Table 6, it has been found that the dispersibility of the carbon material dispersion containing carbon nanotubes can be controlled by blending the preservatives and adjusting pH.

### Industrial Applicability

The carbon material dispersion is excellent in stability and dispersibility over time, is useful as a material for a fuel cell, electrodes, an electromagnetic wave shielding material, a conductive resin, a member for a field emission display, or the like, can be used particularly for a slurry composition for a negative electrode suitable for production of an electrode of a lithium ion secondary battery or the like, can be used for production of an electrode, and can realize excellent battery performance.

## Claims

1. A carbon material dispersion comprising at least a carbon material containing a carbon nanotube, a dispersant, a preservative, and a liquid medium, wherein the preservative contains a triazine-based compound and at least one selected from Group A below:
Group A: organic sulfur-based, organic nitrogen sulfur-based, organic halogen-based, haloallylsulfone-based, iodopropargyl-based, N-haloalkylthio-based, nitrile-based, pyridine-based, 8-oxyquinoline-based, benzothiazole-based, isothiazoline-based, dithiol-based, pyridineoxide-based, nitropropane-based, organotin-based, phenol-based, quaternary ammonium salt-based, thiazine-based, anilide-based, adamantane-based, dithiocarbamate-based, brominated indanone-based, benzylbromacetate-based, and inorganic salt-based compounds.

2. The carbon material dispersion according to claim 1, wherein a content of the triazine-based compound is 0.001 to 0.2 mass% with respect to a total amount of the dispersion, and a total content of the preservative is 0.5 mass% or less with respect to the total amount of the dispersion.

3. The carbon material dispersion according to claim 1 or 2, wherein the preservative exhibits a preservative effect against at least one species selected from the group consisting of genus Fusarium, genus Cellulomonas, genus Delftia, genus Cupriavidus, genus Rhizobium (formerly Agrobacterium radiobacter), genus Micrococcus, genus Stomatococcus, genus Planococcus, genus Staphylococcus, genus Deinococcus, genus Streptococcus, genus Leuconostoc, genus Pediococcus, genus Aerococcus, genus Gemella, genus Peptococcus, genus Peptostreptococcus, genus Ruminococcus, genus Coprococcus, genus Sarcina, genus Bacillus, genus Sporolactobacillus, genus Clostridium, genus Desulfotomaculum, genus Sporosarcina, genus Oscillospira, genus Lactobacillus, and genus Listeria.

4. A slurry composition for a negative electrode for a secondary battery, comprising the carbon material dispersion according to claim 1 or 2.
